**Europäisches Patentamt**

**European Patent Office**

**Office européen des brevets**

(11) Veröffentlichungsnummer: **0 157 337**
**B1**

(12) **EUROPÄISCHE PATENTSCHRIFT**

(45) Veröffentlichungstag der Patentschrift: **16.05.90**

(51) Int. Cl.⁵: **A 01 B 13/08, E 02 F 5/30**

(21) Anmeldenummer: **85103546.9**

(22) Anmeldetag: **26.03.85**

(54) **Lockerungsgerät.**

(30) Priorität: **31.03.84 DE 3412043**

(43) Veröffentlichungstag der Anmeldung:
**09.10.85 Patentblatt 85/41**

(45) Bekanntmachung des Hinweises auf die
Patenterteilung:
**16.05.90 Patentblatt 90/20**

(84) Benannte Vertragsstaaten:
**AT BE DE FR GB IT**

(56) Entgegenhaltungen:
DE-A-1 918 670
DE-A-2 607 364
DE-A-3 006 446
DE-A-3 128 736
DE-C- 868 678
FR-E- 21 875
GB-A-1 192 997
GB-A-1 292 844
US-A-3 451 487

(73) Patentinhaber: **Kaelble - Gmeinder GmbH**
**Wilhelmstrasse 44 Postfach 1320**
**D-7150 Backnang (DE)**

(72) Erfinder: **Gabriel, Herbert**
**Schillerstrasse 22**
**D-6950 Mosbach (DE)**

(74) Vertreter: **Utermann, Gerd, Dipl.-Ing.**
**Kilianstrasse 7 (Kilianspassage) Postfach 3525**
**D-7100 Heilbronn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 157 337 B1

# Beschreibung

Die Erfindung betrifft ein Lockerungsgerät zur Tief lockerung verdichteter, meist landwirtschaftlich genutzter Böden, mit einem an einem Zugfahrzeug verstellbar anbringbaren Rahmen und mit beweglich einen Einstechvorgang und einen anschließenden Hubvorgang ausführenden, angetriebenen Scharen, die an in der Eintauchtiefe verstellbaren Zähnen angebracht sind.

Es ist bekannt, zur Bodenverbesserung und Ertragssteigerung landwirtschaftlich genutzter Böden seit Jahren Bodenlockerungsgeräte einzusetzen. Anfänglich wurden meist Geräte mit starren Zähnen, bestückt mit Scharen, verwendet. Heute sind jedoch häufig die Lockerungsgeräte mit bewegten Scharen ausgerüstet, um einerseits die Lockerungsqualität zu verbessern und andererseits Zugleistung einzusparen oder die Flächenleistung zu erhöhen. Speziell in der Landwirtschaft sind solche Geräte direkt am Heck des Schleppers angebaut, weil sie sich so gut manövrieren lassen. Weil bekannt ist, daß sich durch eine Bewegung der Schare Zugkraft einsparen läßt, sind verschiedene neue Systeme für die Bewegung der wirksamen Scharflächen bekannt geworden.

Bei einem bekannten Gerät dieser Art (nach DE-OS 19 18 670) wird beispielsweise das Schar um einen quer zur Scharrichtung liegenden Bolzen gewippt. Bei einem anderen System (nach DE-PS 26 07 364.3) wird das Schar durch zwei Lenkerhebel geführt, so daß es eine Kombinationsbewegung ausführt und man dadurch zwischen einem typischen Vorstechtakt und anschließendem Hubtakt unterscheiden kann. Wieder ein anderes System (nach DE-OS 31 28 736.0) erzeugt die Scharwippbewegung durch Zusammenwirkung der Bewegung des das Schar tragenden Zahnes und eines zusätzlich bewegten Messers, welches ebenfalls am Schar angelenktist und damit Zwangsabläufe am Schar erzeugt.

Die beiden letztgenannten Systeme weisen pro Lockerungsspur ein einziges bewegtes Schar auf, welches die Gesamtscharfläche bildet und welches entsprechend seinem kinematischen Bewegungsablauf zwangsläufig abwechslungsweise durch die vordere Scharhälfte und anschließend durch die hintere Scharnälfte, gesehen pro Kurbelumdrehung, Material verdrängt. Die vordere Scharhälfte bricht beim Einstechtakt speziell mit ihrer Spitze das Material. Die hintere Scharhälfte hebt beim anschließenden Hubtakt das bereits gebrochene Material nur an. Dafür sind entsprechende Anlenkungen der die Schar tragenden und bewegenden Hebel vorgesehen. Diese Anlenkungen erfordern unter der Scharhälfte eine gewisse räumliche Ausdehnung, die sich aus den Abstützkräften, der Notwendigkeit, den agressiven Bodenverhältnissen entsprechend gekapselte und ausgebildete Lager vorzusehen, und den Bedingungen des jeweils gewählten Gelenkmehrecks ergibt. Dadurch ist bei solchen Konstruktionen eine so große Scharfläche erforderlich, daß nur bei sehr großen und leistungsstarken Tieflockerungsgeräten für entsprechend große Zugfahrzeuge eine günstige Scharflächenverteilung möglich ist. Bei dem für den praktischen Einsatz und die Verwendung von in der Landwirtschaft verfügbaren Zugmitteln auftretenden Zugkräften mußten bisher bezüglich der Schargestaltung beträchtliche Kompromisse eingegangen werden, so daß es bei den aus den Lagerverhältnissen resultierenden Scharflächen zu einem sehr unterschiedlichen Kraftbedarf zwischen den beiden Takten des Einstechens und Hebens kam. Da sich der Zugkraftbedarf des Zugfahrzeuges vom höchsten Kraftbedarf, in diesem Fall in der Regel vom Einstechvorgang ableitet, sind Reifenfahrzeuge bezüglich ihrer Traktionsfähigkeit häufig überlastet, so daß für die bisher mit einer sinnvollen Scharbewegung gestalteten Geräte praktisch nur Raupenfahrzeige eingesetzt werden konnten, die jedoch in der Landwirtschaft nur selten zur Verfügung stehen, weshalb die mit optimierter Scharbewegung und Fahrgestaltung ausgestatteten Tieflockerungsgeräte nicht in dem an sich sinnvollen Umfang zum Einsatz kommen konnten.

Aus DE-OS 30 06 446 ist ein Schlepperanbaugerät zur Bodenlockerung mit zwei an einem Tragrahmen auf- und abbewegbaren Lockerungswerkzeugen nebeneinander bekannt, wobei jeweils zwei Lockerungswerkzeuge paarweise hintereinander angeordnet sind, von denen die in Fahrtrichtung vorderen Lockerungswerkzeuge höher als die hinteren liegen und wobei die Werkzeugschäfte jedes Werkzeugpaares gegenläufig auf- und abbewegbar sind. Dabei liegen zweckmäßig die Werkzeugspitze des hinteren Lockerungswerkzeuges und das Hinterende des vorderen Lockerungswerkzeuges auf einer etwa in Richtung der Auf- und Abbewegung der Werkzeuge verlaufenden Geraden. Dabei können die Werkzeugschäfte oben nach vorwärts geneigt angeordnet sein und ihre Bewegung kann in Schaftlängsrichtung erfolgen. Insbesondere soll vorgesehen sein, daß das vordere Lockerungswerkzeug eine breitere Schar als das hintere, tieferliegende aufweist. Die Werkzeugschäfte können in Längsrichtung verstellbar gehalten sein. Die Werkzeugpaare können an doppelarmigen Hebeln angelenkt und mittels eines Exzenterantriebes mit einer quer zur Fahrtrichtung angeordneten Rüttelwelle bewegt werden. Bei diesem Gerät ist beabsichtigt, die obere Bodenschicht zunächst vom vorderen Werkzeug aufzubrechen und dann durch das Anheben der unteren Schicht mit dem nachfolgenden tieferen Werkzeug weiter zu zerteilen, so daß bei mit zwei hintereinander laufenden, in unterschiedlicher Höhenlage arbeitenden Scharen keine verdichtete Trennschicht auftritt. Durch die gegenläufige Auf- und Abwärtsbewegung der in unterschiedlicher Höhenlage arbeitenden Schare soll zwischen diesen eine Scherwirkung im Boden auftreten, zwischen der das Material der tiefer liegenden Schicht in einzelnen Krumenteilen gegeneinander versetzt werden soll. Selbst bei der Schrägstellung wird durch die Schare keine nennenswerte Horizontalbewegung ausgeführt, da nur eine beträchtliche Vertikalbewegung beabsichtigt ist. Bezüglich der Vorwärtsbewegung hat man es also mit denselben Einstichverhältnissen wie bei feststehenden Scharen und Zähnen zu tun. Die vorteilhafte Aufteilung in einen Einstechtakt und einen Hubtakt, die eine zweckmäßige Abstimmung auf die Fahrzeuggeschwindigkeit zuläßt, wird hier nicht beabsichtigt und ermöglicht. Theoretisch strebt diese Konstruktion zwar größere Laufruhe an, sie berücksichtigt jedoch nicht, daß beide Schare bei der durch den Exzentermechanismus erzwungenen Abwärtsbewegung jeweils mit ihrer unteren offensichtlich im wesentlichen geraden Scharfläche auf verdichteten oder gewachsenen Boden schlagen und so zu einer beträchtlichen Laufunruhe führen. Durch die erheblich unterschiedlichen Längen der Werkzeugschäfte wird es schwierig sein, ein solches Gerät mit einem einfachen preiswerten und wirksamen Massenausgleich zu versehen. Jedes Schar arbeitet jeweils in noch nicht aufgelockertem Boden. Die Schare ergänzen sich nicht zu einer gemeinsamen Arbeitsfläche als Gesamtscharfläche, sondern bearbeiten unterschiedliche Schichten. Zwar laufen die Werkzeugschäfte hintereinander durch die obere Schicht, nicht jedoch im Bereich der unteren, für die Tieflockerung wesentlicheren Schicht. Dort arbeiten Schaft und Schar nach Art eines im Grunde feststehenden, nur etwas auf- und abwärtsbewegten Schar-und Grindel-Tieflockerungs-Zahnes ohne Aufteilung in Einstech- und Hubtakt. Die vorteilhafte Scharbewegung, wie sie nach DE-PS 26 07 364 und DE-OS 31 28 736 für sehr tiefe, bezüglich der Leistung günstige Lockerung auch in ungünstigen Böden möglich ist, kann mit dieser Anordnung nicht erzielt und ein vergleichbares Arbeitsergebnis wie bei der Erfindung nicht ermöglicht werden.

Aus GB-PS 12 92 844 ist ein Bodenbearbeitungsgerät oder Bodenbearbeitungswerkzeug bekannt, welches dazu dient, einen Kabelkanal zu schaffen und in diesen unmittelbar das Kabel einzulegen, wobei besonderer Wert darauf zu legen ist, daß der Boden im Nachbarbereich nach Möglichkeit nicht oder zumindest so wenig wie möglich aufgelockert wird. Demgemäß sind an einem, von einem Zugfahrzeug zu ziehenden einachsigen Anhängefahrzeug mit zwei Rädern an einem Rahmen zwei senkrecht nach unten ragende messerartig oder keilförmig mit Spitze nach vorn gestaltete Aufreiß- oder Aufschneidewerkzeuge unterschiedlicher Länge vorgesehen, die am unteren Ende nach vorne gerichtete, fußartige Hacken aufweisen. Das vordere Schneidewerkzeug ist kürzer als das hintere. Hinter dem hinteren Werkzeug ist die Einführeinrichtung für das Kabel vorgesehen. Die beiden Werkzeuge erstrecken sich im wesentlichen senkrecht und sind am Fahrzeugrahmen um horizontale Achsen schwingbar gelagert. Sie sind als zweiarmige Hebel gestaltet, deren obere Enden über Lenker mit einem Exzenterantrieb so gestaltet sind, daß die beiden Werkzeuge gegenphasig hin- und hergeschwenkt werden, so daß ihre unteren Enden beide etwa horizontal verlaufende, gegenphasige Bewegungen ausführen, so daß die Schneidmesser den Kanal für das Einlegen des Kabels oder dgl. aufschneiden können. Zusätzlich kann dem ganzen Rahmenaufbau mit Exzentervibratoren eine Vibrationsbewegung aufgeprägt werden, die das Schneidergebnis für den Kanal verbessern und den Kraftbedarf verringern soll. Schare zum Aufbrechen und Tieflockern des Bodens sind nicht vorgesehen. Die beiden Schneidwerkzeuge arbeiten nur bis in unterschiedliche Tiefen, so daß jedes Schneidwerkzeug nur die ihm zukommende Bodenschicht zu durchteilen hat und der obere Bereich des hinteren Schneidwerkzeuges in dem Kanal läuft, den das vordere Werkzeug geschnitten hat. Hier sind zwar gekoppelt angetriebene, nach unten gerichtete Werkzeuge im Erdbearbeitungsbereich vorgesehen. Sie eignen sich in der vorgesehenen Anordnung, Ausbildung und Lagerung und mit dem vorgesehenen Antrieb nicht für die Tieflockerung von möglichst breit aufzubrechendem verdichteten Boden. Eine auf die Fahrgeschwindigkeit abgestimmte, gesteuerte Bewegung einer auf tiefster Sohle arbeitenden Gesamtscharfläche ist nicht vorgesehen.

Aus DE-PS 868 678 sind Verfahren und Vorrichtungen zur Kraftersparnis bei Bodenbearbeitungsmaschinen bekannt, bei denen das den Boden bearbeitende Werkzeug in Schwingungen versetzt wird. Dabei wird beispielsweise ein Pflugschar mittels eines Halters zwischen einer Mehrzahl von Federn mit zwei Freiheitsgraden schwingend aufgehängt und über exzentrisch an dem Halter befestigte, drehend angetriebene Massen oder sonstige Schwinger in Schwingungen gemäß den Freiheitsgraden versetzt, und zwar um die Reibung zu verringern und größere Bodenteile zu verkleinern. Dabei kann man das Pflugschar auch unmittelbar über Blattfedern abstützen, wobei der schwingende Exzenterantrieb an dem freien, das Pflugschar tragenden Ende der Feder vorgesehen ist. Bestimmte systematisch und mit genauer Hebelanordnung entsprechend der Kinematik derselben gesteuerte und auf die Fahrgeschwindigkeit abgestimmte Bewegungen können solche vibrierenden Pflugscharen nicht ausführen, weshalb sie für eine Tieflockerung von Böden nicht in Betracht kommen.

Aus DS-PS 3,451,487 ist es bekannt, bei Bodenbearbeitungsgeräten, die im ganzen in Schwingungen versetzt werden, Fliehgewichte zum Massenausgleich vorzusehen.

Die letztgenannten bekannten Geräte haben zwar im Boden keine Halterung, die Gelenke zum Tragen der Lockerungsschare aufweisen, wie die zuerst genannten Lockerungsgeräte. Dafür können sie auch keine in Vorstech- und Hubtakt aufgeteilte, systematische Zwei-Takt-Lockerung ausführen.

Aus GB-A-1 192 997 ist ein Bodenbearbeitungsgerät bekannt, bei dem oberhalb des Bodens an dem Gerät gelagerte Stangen, Halter oder Zähne am unteren Ende eine einfache Schar aufweisen. Sie sind jeweils um den zugehörigen, am Gerät liegenden Drehpunkt schwenkbar und entsprechend antreibbar. Mehrere Schare an ihren Zähnen können nebeneinander liegend in einer quer zur Vorschubrichtung verlaufenden Reihe angeordnet sein. Es können zwei Reihen solcher Zähne und Schare angeordnet sein. Diese sind dann jedoch zueinander versetzt. Damit durchläuft jeder Zahn samt seiner Schar eine getrennte Furche. So soll breitflächig eine gute Bodenbearbeitung erzielt werden können. Jedoch sind ein gekoppeltes Einstechen und Anheben von zwei zusammenwirkenden Scharteilflächen nicht möglich, weil diese in verschiedenen Furchen laufen. Eine Tandemanordnung ist nicht vorgesehen. Damit ist der Kraftaufwand, ingesamt noch verhältnismäßig groß, weil jede Schar den Bodenbereich, in den sie hineinarbeitet, aufbrechen muß. Durch den belastungslosen Rückzug entsteht eine entsprechende Dnruhe des ganzen Gerätes. Die Lockerungswirkung ist außerdem relativ schlecht, weil nur ein Scharende als Bruchkante für das Material zur Verfügung steht.

Die mit gesteuerter Pflugscharbewegung in der Tiefe arbeitenden Geräte haben in der Regel einen so großen Kraftbedarf, daß sie nur von Raupenfahrzeugen für die echte Tieflockerung gezogen werden können. Es besteht jedoch ein Bedarf nach einem wirklich tief arbeitenden Lokkerungsgerät, welches an übliche, mit Rädern ausgestattete Ackerschlepper unmittelbar angebaut werden kann und welches bei relativ geringem Kraftbedarf derart gestaltet ist, daß während des Zugvorganges jeweils über einen Doppeltakt ein möglichst gleichmäßiger Kraftbedarf vorliegt und wobei im Boden liegende Gelenke für eine in Einstechtakt und Hubtakt systematisch aufgeteilte Bewegung entfallen.

Der Erfindung liegt die Aufgabe zugrunde, bei Lockerungsgeräten mit den eingangs genannten Merkmalen eine Gestaltung für die in der Tiefe arbeitende Scharanordnung und einen für sie geeigneten Bewegungsantrieb vorzuschlagen, der bei günstiger Bewegung der Scharteilflächen einen relativ geringen und möglichst gleichmäßigen Kraftbedarf über den Doppeltakt, frei gestaltbare Gesamtscharflächen und wenig störanfällige Anlenkungen ermöglicht.

Erfindungsgemäß ist vorgesehen, daß die je Lockerungsfurche eine zusammenwirkende Gesamtscharfläche bildenden Schare in getrennt gelagerte und getrennt bewegliche Scharteilflächen aufgeteilt sind und an zwei je Lockerungsfurche hintereinander liegend angeordneten, am Rahmen angelenkten Zähnen befestigt sind und der Antrieb die beiden Zähne mit ihren festen Scharteilflächen derart bewegt, daß die für den Einstechvorgang wirksame vordere Scharteilfläche und die für den Hubvorgang wirksame hintere Scharteilfläche eine in Tandemanordnung wirkende Gesamtscharfläche bilden, deren Teilflächen abwechselnd den Einstechvorgang und anschließend den Hubvorgang durchführen.

Durch die erfinderische Idee, die Gesamtscharfläche nicht an einem einstückigen Schar auszubilden, sondern jeweils zwei Scharteilflächen vorzusehen, die unmittelbar hintereinander und übereinander so arbeiten, daß sie wie ein zusammenhängendes, entsprechend sinnvoll geführtes Schar arbeiten, ist es möglich, unter der Oberfläche ohne Gelenke auszukommen und trotzdem die sinnvolle Führung der Scharteilflächen zu ermöglichen. Da keine Gelenke mehr vorgesehen sind, brauchen auch die Scharteilflächen nicht Gelenke abzudecken und können so bezüglich ihrer Größe und des Anstellwinkels beliebig bestimmbare Einzelschare sein, die an den von oben her in den Boden eingreifenden Zähnen austauschbare, jedoch bei der Arbeit fest befestigte Werkzeuge sind. Durch eine entsprechende Aufhängung und einen entsprechenden Antrieb der Zähne oberhalb des Bodens kann in Abstimmung auf die Fahrgeschwindigkeit die in der Regel kleinere vordere Einstechschar während des einen Taktteiles den aus der Fahrgeschwindigkeit resultierenden Vorschub unterstützen und den entsprechenden großen Kraftanteil benötigen, während bei ihrem Rückwärtshub bezüglich des Rahmens, der in Abstimmung auf die Fahrgeschwindigkeit in weiten Bereichen einem Stillstand gleichkommen kann und folglich keine Kraft erfordert, die zweite Scharteifläche, welche sogar entsprechend größer gestaltet sein kann, in dem vorgestochenen Bereich das die während dieses Teilhubes für sie fast ganz zur Verfügung stehende große Kraft erfordernde Anheben und somit breitflächige Aufbrechen der gesamten darüber liegenden Bodenschicht bewirken kann. Dabei wird vermieden, daß die Schare auf den ungelockerten, verdichteten oder gewachsenen Boden gerichtete vertikale Stampfbewegungen ausführen, weil das vordere Schar praktisch nur Horizontalbewegungen und das hintere Schar wesentliche Vertikalbewegungen und auch die Horizontalanteile seiner Bewegung nur in Bodenbereichen ausführt, in die schon in tieferer Ebene vorgestochen ist. So wird eine breitflächig wirkende Bodenauflockerung großer Wirksamkeit erzielt, die mit einem mehrstufigen Nacheinanderbearbeiten von auf- und abwärts bewegten Scharen nicht erreicht werden kann. Die Erfindung führt zu einer Nivellierung des Kraftbedarfs am Schar zwischen Einstechtakt und Hubtakt bei gleichzeitiger Senkung des Gesamtkraftbedarfs und zu einem ruhigen Lauf des Gerätes, so daß es an einem Räderschlepper herkömmlicher und in der Landwirtschaft verfügbarer Art selbst für wirksame Tieflockerung schwieriger Böden eingesetzt werden kann.

Während bei bekannten Geräten nach GB-A-1 192 997 zwar schon eine obere, damit weniger anfälligere Lagerung vorgesehen ist, ist durch die Tandemanordnung und das direkte Zusammenwirken zweier Scharteilflächen in einer Furche infolge der hintereinander liegenden Anordnung und dem Arbeiten im 2-Takt-System das Lockern mit wesentlich geringerem Kraftaufwand und damit auch bei einer bedeutenden Reduzierung der Zugkraft möglich. Die Lockerungsqualität steigt dadurch, daß zwei Scharenden, also zwei Bruchkanten, für das Aufbrechen des Bodenmaterials zur Verfügung stehen. Damit ist auch Bearbeitung in großer Tiefe verbessert möglich. Außerdem läuft die ganze Anordnung sehr ruhig.

In zweckmäßiger Ausgestaltung der Erfindung wird vorgesehen, daß die Scharspitze des die hintere Scharteilfläche bildenden Schares gegenüber der Scharspitze des die vordere Scharteilfläche bildenden Schares einen vertikalen Abstand aufweist. Da die Erfindung vorsieht, daß die Wirkung der vorderen Scharfläche sich mit der Wirkung der hinteren Scharfläche zu einer gedachten funktionellen Gesamtscharfläche ergänzt, welche unter einem kinematischen Zwangsablauf steht, ist es besonders zweckmäßig, wenn diese nicht nur hintereinanderliegen in unmittelbarer Nähe sind, sondern weil die Scharflächen keilförmig in den Boden eingreifen, auch das hintere Schar in seiner Höhenlage so angeordnet ist, daß es praktisch unmittelbar an das vordere Schar anschließt, wozu ein entsprechender vertikaler Abstand, der der Höhe des vorderen Schares in etwa entspricht, besonders zweckmäßig ist. Dadurch, daß das hintere Schar höher liegt als das vordere unterscheidet sich die Anordnung auch von den bekannten, zu anderen Zwecken dienenden, jedoch in unterschiedlicher Höhe vorgesehene Schare aufweisenden Geräten. Bei den bekannten Geräten liegt das vordere Schar stets höher als das hintere, weil es zunächst nur die obere Teilschicht zu einem Kanal zerteilen oder lockern soll. Bei der Erfindung sollen beide Scharteilflächen in praktisch der gleichen Tiefe zusammenwirkend arbeiten.

Unter den verschiedenen möglichen Scharteilflächenbewegungen ist es besonders zweckmäßig, die Scharteilflächen mit gegenläufigen Bewegungen anzutreiben, die für beide hintereinanderliegende Teilschare wesentliche Horizontalanteile ausführen. Dabei ist es besonders zweckmäßig, wenn die horizontalen Amplituden der Ausschläge der Scharspitzen des vorderen sowie des hinteren Schares gegenläufig und vorzugsweise gleich groß und der überwiegend gefahrenen Fahrgeschwindigkeit angepaßt sind. So kommt es zu einem annähernden Stillstand der hinteren Scharspitze gegenüber dem Boden, wenn die vordere Scharspitze einsticht und gleichzeitig mit der Fahrgeschwindigkeit bewegt wird und zu einem annähernden Stillstand der vorderen Scharspitze gegenüber dem Boden, wenn die hintere Scharspitze vorsticht und dabei mit der Fahrgeschwindigkeit bewegt wird. Mit der Erfindung erzielte Vorteile bestehen insbesondere auch darin, daß durch die gewählte Anordnung und Aufteilung der Scharfunktionen Variable möglich werden, wie Anstellwinkel, Schargröße und Scharform, sowie erforderlichenfalls horizontale Spitzenausschläge der Schare, die es gestatten, eine annähernd gleiche Antriebsleistung bei der Schare zu erreichen. Diese nivellierten Leistungen vermeiden Leistungsspitzen, die unweigerlich zu Spitzen in den Zugkräften führen würden, welche gerade die gummibereiften Fahrzeuge bezüglich ihres Traktionsvermögens nicht ertragen können. Ein weiterer Vorteil liegt in dem ruhigen Lauf des Gerätes, da die mit Scharen bestückten gegenläufigen Zähne in Tandemanordnung zwangsläufig einen horizontalen Massenausgleich ergeben.

Für die Kinematik des Scharantriebes gibt es verschiedene Möglichkeiten, die sich nach der Anordnung der Gelenkpunkte, der Ausbildung der Hebelarme und dgl. richten, jedoch stets die vorn beschriebene, sinnvolle Gesamtscharflächenbewegung bewirken müssen. Eine besonders einfache und mit wenig Gelenkpunkten auskommende, eine solide, verschmutzungsarme Abstützung ermöglichende Ausführung sieht vor, daß die Scharspitze des vorderen Schares etwa senkrecht unter dem zugehörigen Gelenkpunkt des zugehörigen vorderen Zahnes liegt. Zahn und Schar führen dann eine einfache Teilkreisbewegung aus, bei der das Schar unter Berücksichtigung seines Hubes von etwa 30 bis 50 mm praktisch nur Horizontalbewegungen ausführt, was sonst nur mit Schiebegelenken oder besonderen Gelenkvierecken möglich wäre. Bei dieser Anordnung der Scharspitze des vorderen Schares direkt unter dem Hauptdrehpunkt des vorderen Zahnes erfolgt unter der Scharspitze keine Bodenverdichtung, da die Scharspitze zum Boden eine reine Tangentialbewegung ausführt. Hierdurch wird die Laufruhe des Gerätes besonders groß und es können Bremseffekte durch Bodenverdichtung vermieden werden und insgesamt kann die Antriebsleistung erheblich vermindert werden.

Die sinngemäß zugeordnete Bewegung des hinteren Schares mit nur einem Gelenkpunkt für den zugeordneten Zahn kann dadurch besonders leicht ermöglicht werden, daß die Scharspitze des hinteren Schares einen Abstand zur durch den Gelenkpunkt des ihr zugeordneten hinteren Zahnes verlaufenden Senkrechten aufweist. Die Länge der gewählten Hebelarme des Zahnes und der vorgenannte Abstand sind unter Berücksichtigung der gewünschten Hubeffekte und der Horizontalbewegungen des Schares unter Berücksichtigung der Fahrgeschwindigkeit und der verfügbaren Antriebsleistung vom Fachmann rechnerisch und empirisch zu ermitteln, indem er die vorstehend genannte Lehre berücksichtigt. Dabei kommt der Gesamtkonstruktion zugute, daß sich dann weit auseinanderliegende Gelenkpunkte für die Zähne ergeben, die zu einer guten Abstützbasis und einem günstigen Angriff für den Antrieb mitten zwischen ihnen führen.

Durch den gegenläufigen Antrieb praktisch gleich langer Zähne mit ähnlich großen Scharen wird schon ein guter Massenausgleich ermöglicht. Durch die Aufteilung in zwei getrennt angetriebene Schare ist es nun jedoch möglich, die Scharflächen, Scharkanten und Anstellwinkel in ihren Größen und Gestaltungen so zu dimensionieren, daß unter Berücksichtigung der während der Lockerungsbewegung auftretenden Widerstände die Antriebsleistungen beider Zähne jeweils etwa gleich groß sind. So gibt es mehr Variable für eine Optimierung als bei herkömmlichen Geräten, was nicht nur der Laufruhe, sondern auch der besseren Ausnutzung verfügbarer Leistungen an schwächeren Zugfahrzeugen und damit geringeren Verlusten zugute kommt. Durch die etwa gleich langen Zähne und die größere Wahlfreiheit in den Einzeldimensionierungen ist schon ein guter Massenausgleich möglich. Desweiteren können jedoch zum Ausgleich der bewegten Massen, insbesondere der nicht durch gemeinsamen Antrieb ausgeglichenen vertikal bewegten Massen Fliehgewichte auf den Antriebswellen vorgesehen sein. Solche Ausgleichsfliehgewichte sind an sich bekannt, tragen hier jedoch zur Optimierung auch noch bei.

Die Zähne werden zweckmäßig als Winkelhebel ausgebildet, an die jeweils von einem gemeinsamen Exzenter angetriebene Pleuel angreifen. So wird die Zahl der Gelenke auf ein Mindestmaß beschränkt und damit herstellungs- und wartungs- sowie betriebsdauergünstig beeinflußt. Trotzdem ist mit sehr einfacher Kinematik und einfachen stabil auszuführenden Antriebsmitteln die für die Erfindung wichtige Scharbewegung der Teilschare einfach und kraftsparend zu ermöglichen.

Die Gelenke am Rahmen, an denen die Zähne angelenkt sind, können als Drehgelenke mit Bolzen ausgebildet sein. Dann sind die Relativbewegungen im Bereich des Antriebes bei dessen Gestaltung zu berücksichtigen. Eine herstellungs-, benutzungs- und wartungsmäßig günstige Lösung sieht vor, daß die Gelenke der Zähne von Blattfedern gebildet sind, die in Richtung der resultierenden Haltekräfte angeordnet sind. Die Ausschläge an den langarmigen Hebeln sind verhältnismäßig gering, so daß Blattfedern diesen Bewegungen gut folgen können. Bei der entsprechenden Anordnung können sie auch die auftretenden Kräfte gut abstützen. Sie neigen während ihrer Lebensdauer nicht zu Abnutzungen wie Drehgelenke und behalten deshalb über die gesamte Lebensdauer gleichbleibende Führungsqualität. Zudem können sie die kleinen quer zu ihrer Längserstreckung auftretenden Horizontalbewegungen aus der Anlenkung bei wenigen Gelenkpunkten problemlos ausgleichen. Sie sind leicht zu montieren und preiswert herzustellen. Sie sind auch nicht mit der gefederten Aufhängung einer einfachen Pflugschar vergleichbar, weil sie hier im Rahmen einer ganz bestimmten und den Anlenkgesetzen genügenden Kinematik eingesetzt und nicht zum freien Federn benutzt werden. Demgemäß ist es möglich, daß in vorteilhafter Weiterbildung der Erfindung beide Zähne je Lockerungsfurche an einem einzigen Pleuel geringen Hubes von etwa 10 mm angelenkt sind, wobei die Blattfedern den Wegausgleich in etwa horizontaler Richtung übernehmen. Wenn man die zuvor beschriebenen kinematischen Verhältnisse mit weit auseinanderliegender Anlenkung wählt, wird zweckmäßig die Blattfeder des vorderen Zahnes zur Vertikalen unten nach hinten und die Blattfeder des hinteren zur Vertikalen unten nach vorne geneigt. Das führt neben der günstigen Abstützung der Kräfte zu einer konstruktiv einfachen und übersichtlichen Lösung.

Das Lockerungsgerät wird zweckmäßig direkt am Zugfahrzeug mit den entsprechenden Bewegungsmöglich keiten für den Straßenfahrbetrieb und das verschieden tiefe Einsinken angebracht. Dazu kann der Rahmen zweckmäßig mit Halterungen für die unmittelbare Abstützung an einem mit Rädern und Reifen versehenen Zugfahrzeug, vorzugsweise für die Aufnahme an standardisierten Geräteanschlußpunkten ausgestattet sein. So kann das Gerät vom Fahrersitz aus manipuliert werden und es kann ein günstiges Wechselspiel der Kräfte zwischen Zugfahrzeug und Zähnen erreicht werden, welches bei angehängten Nachlaufgeräten mit eigenen Rädern nicht möglich ist, worin ein wesentlicher Unterschied zu bekannten Kanalgeräten zur Verlegung von Leitungen besteht.

Die Schare werden zweckmäßig mit etwa gleichen Anstellwinkeln vorgesehen. Dabei kann die hintere Scharspitze etwa auf Höhe der Hinterkante des vorderen Schares liegen. Zweckmäßig ist das vordere Schar kleiner als das hintere ausgebildet. Dadurch, daß die Scharspitze des hinteren Schares gegenüber der Scharspitze des vorderen Schares höhenversetzt ist, haben auch Schrägstellungen des Zugmittels oder Zugfahrzeuges keine Verdichtungen unter dem hinteren Schar zur Folge.

Ausführungsbeispiele der Erfindung werden nachfolgend anhand der Zeichnungen dargestellt und näher beschrieben.

Es zeigen:

Fig. 1 Eine schematische Seitenansicht eines Lockerungsgerätes mit Tandem-Zahn- und -Schar-Anordnung in Arbeitsstellung und angedeuteter Transportstellung;

Fig. 2 einen Grundriß des dreispurigen Gerätes gemäß Fig. 1;

Fig. 3 eine der Fig. 1 entsprechende Darstellung des Lockerungsgerätes in Arbeitsstellung mit eingezeichnetem Kraftverlauf;

Fig. 4 eine den Fig. 1 und 3 entsprechende Seitenansicht eines weiteren Ausführungsbeispieles.

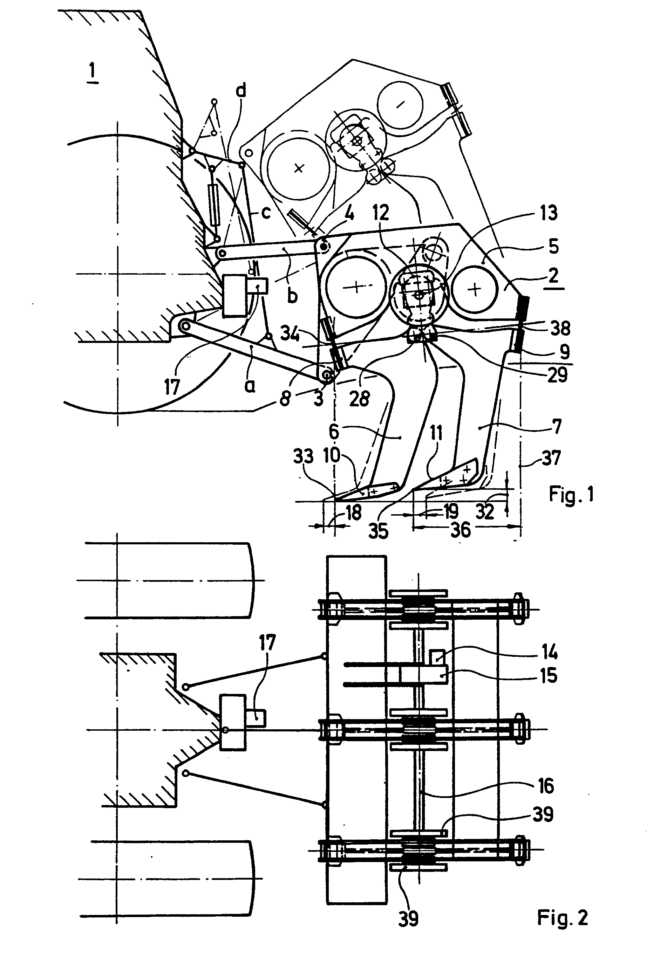

Das Fahrzeug 1 nach Fig. 1 bis 3, beispielsweise ein landwirtschaftlicher Traktor, trägt das am Heck des Fahrzeuges angebaute Tieflockerungsgerät 2, das in an sich bekannter Weise durch einen Verstellmechanismus a, b, c, d, beispielsweise einen Kraftheber, vorzugsweise hydraulisch-höhenverstellbar ist. Diese Höhenverstellbarkeit dient zur Einstellung der Lockerungstiefe und wahlweise der Transportstellung. Das Lockerungsgerät 2 wird von dem Kraftheber an den Aufnahmepunkten 3 und 4 im System einer üblichen Drei-Punkt-Aufhängung aufgenommen.

Das Lockerungsgerät 2 weist einen Rahmen 5 auf, der für jede Lockerungsfurche einen vorderen Zahn 6 und einen hinteren Zahn 7 in Tandemanordnung aufnimmt, welche über je eine Blattfeder 8 bzw. 9 mit entsprechenden Befestigungs-Hilfsmitteln, beispielsweise Schrauben und/oder Klammern, Rahmen und Zähne verbinden.

Die Blattfedern 8 bzw. 9 übernehmen die Funktion der Hauptdrehpunkte, um welche die Zähne 6 bzw. 7 schwingen. Die Ausbildung dieser Drehpunkte in Form von beispielsweise Gleitlagern wäre mit Lagerspiel behaftet und überdies müßten diese Lager geschmiert werden, was einen erhöhten Aufwand bedeuten würde.

Der vordere Zahn 6 trägt ein vorderes Schar 10, das vorzugsweise aus zwei Hälften, welche mittels Schrauben mit dem Zahn verbunden sind, besteht. Der hintere Zahn 7 trägt ein hinteres Schar 11, das vorzugsweise ebenfalls aus zwei Hälften besteht und mittels Schrauben mit dem Zahn verbunden ist. Das vordere Schar 10 ist wie ersichtlich etwas kleiner als das hintere Schar 11. Das hintere Schar 11 liegt mit seiner Scharspitze 35 etwa auf der Höhe des oberen Endes des vorderen Schares 10. Beide Schare sind keilförmig gestaltet und am jeweiligen Zahn 6 bzw. 7 befestigt. Sie bilden eine - wie vorn beschrieben - zusammenwirkende Gesamtscharfläche und wirken gemäß ihrer Ausbildung und Anordnung sowie ihrem Antrieb jeweils zusammen zur gemeinsamen wechselweisen Auflockerung einer einzigen über ihnen liegenden Bodenschicht. Der Antrieb der Zähne 6, 7 erfolgt über eine Pleuelstange 12, welche durch einen Exzenter 13 angetrieben wird. Dieser erhält nach Fig. 2 einen Antrieb, vorzugsweise über einen Hydromotor 14, welcher über ein Getriebe 15 die Kraft auf die Verteilerwelle 16, die mit dem Exzenter 13 in Verbindung steht, leitet. Der Hydromotor 14 erhält seine Energie von einer schlepperseits angeordneten Hydraulikpumpe 17. Bei Drehung des Exzenters 13 entsteht eine gegenläufige Zahnbewegung mit dem jeweiligen Scharspitzenausschlag 18 bzw. 19. Bei Abstimmung dieses Ausschlages auf die überwiegend zu fahrende Fahrgeschwindigkeit steht die Scharspitze 35 des Schares 11 gegenüber dem Boden annähernd still, während das vordere Schar 10 bei Bewegung des Exzenterhubes nach unten eine volle Grabbewegung aus der Teilbewegung des Traktors 1 und des Zahnes 6 ausführt, während bei Bewegung des Exzenterhubes nach oben die Scharspitze 33 des Schares 10 gegenüber dem Boden stillsteht und das Schar 11 eine volle Lockerungsbewegung aus der Teilbewegung des Traktors 1 und des Zahnes 7 ausführt. Somit wechseln sich Vorstechen und Auflockern pro Exzenterumdrehung stetig ab. Bei geeigneter angepaßter Ausbildung des Schares 10 bzw. des Schares 11 ist eine annähernd gleichmäßige Leistungsaufnahme dieser Grabelemente zu erreichen, die Voraussetzung für einen ruhigen Lauf und einen minimalen Zugkraftbedarf des Zugmittels ist.

Die Zähne 6 und 7 sind so gestaltet, daß durch die gegenläufige Bewegung derselben ein horizontaler Massenausgleich gegeben ist. Die vertikal bewegten Zahn-Massenanteile sowie der Masseneinfluß der Pleuelstange 12 sind durch Fliehgewichte 39 kompensiert. Eine vorteilhafte Anordnung ergibt sich, wenn die Scharspitze 33 des Schares 10 senkrecht unter dem Blattfederbiegepunkt 34 angeordnet ist, während die Scharspitze 35 des Schares 11 zur Senkrechten 37 durch den Blattfederbiegepunkt 38 einen Abstand 36 aufweist.

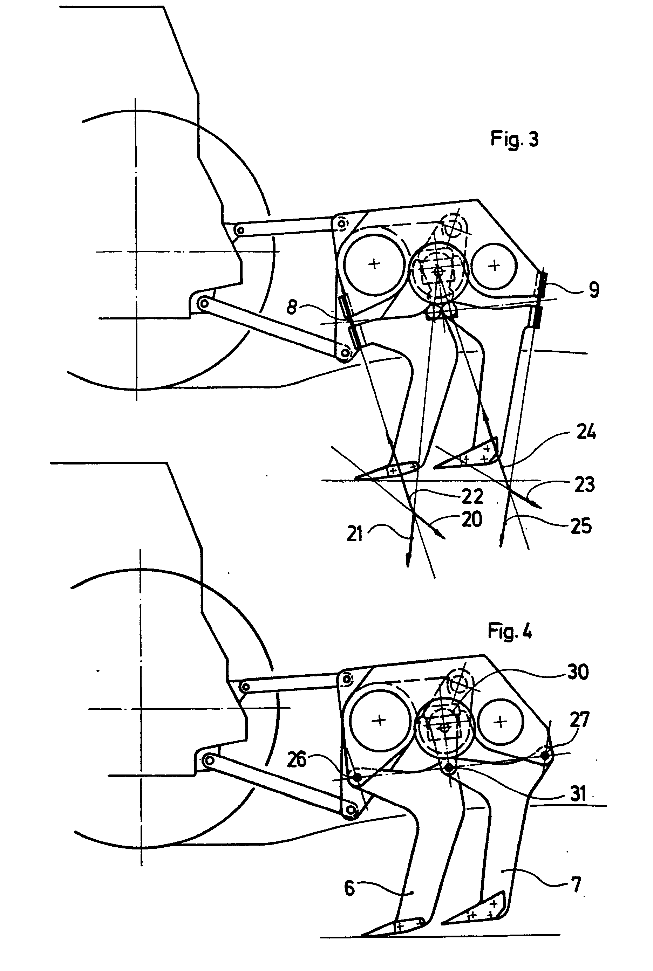

Fig. 3 zeigt eine Darstellung der am Lockerungssystem wirkenden Hauptkräfte. Die auf das Schar 10 einwirkende Grabekraft 20 steht mit der Pleuelstangenkraft 21 und der Haltekraft 22 im Gleichgewicht, ebenso wie die Lockerungskraft 23 mit der Pleuelstangenkraft 24 und der Haltekraft 25. Um eine Überbeanspruchung der Blattfedern 8 bzw. 9 zu vermeiden, sind diese Federn in die jeweilige Richtung der resultierenden Kräfte 22 und 25 gelegt. Geringe Kraftabweichungen aus der Federrichtung werden von den Federn 8 bzw. 9 aufgenommen. In diesen Fällen dienen sie auch der Stoßminderung durch Querverformung.

Fig. 4 zeigt eine Alternativ-Ausbildung der Erfindung. Die Blattfedern 8 und 9 sind durch Gelenke 26 und 27 ersetzt Bei einer weiteren Ausbildung ist die Pleuelstange 12 mit ihren Gelenken 28 und 29 durch je eine Pleuelstange 30 ersetzt, welche über Gelenke 31 die Zähne 6 und 7 antreibt. Die verschiedenen Ausführungen sind beliebig miteinander kombinierbar.

Zusammengefaßt kann die Erfindung auch wie folgt beschrieben werden:

Das Lockerungsgerät gestattet in Verbindung mit einen Zugmittel eine intensive Tieflockerung ver dichteteter meist landwirtschaftlich genutzter, Böden. Je Lockerungsfurche sind zwei mit Scharen (10, 11) bestückte gegenläufig angetriebene Zähne (6, 7) in Tandemanordnung vorgesehen, deren Schare eine in Scharteilflächen aufgeteilte Gesamtscharfläche bilden, deren Teilflächen abwechselnd den Einstechvorgang und anschließend den Hubvorgang durchführen.

**Patentansprüche**

1. Lockerungsgerät (2) zur Tieflockerung verdichteter, meist landwirtschaftlich genutzter Böden, mit einem an einem Zugfahrzeug (1) verstellbar anbringbaren Rahmen (5) und mit beweglich einen Einstechvorgang und einen anschließenden Hubvorgang ausführenden, angetriebenen Scharen (10, 11), die an in der Eintauchtiefe verstellbaren Zähnen (6, 7) angebracht sind, dadurch gekennzeichnet, daß die je Lockerungsfurche eine zusammenwirkende Gesamtscharfläche bildenden Schare (10, 11) in getrennt gelagerte und getrennt bewegliche Scharteilflächen aufgeteilt sind und an zwei je Lockerungsfurche hintereinanderliegend angeordneten, am Rahmen angelenkten Zähnen (6, 7) befestigt sind und der Antrieb (12, 13) die beiden Zähne (6, 7) mit ihren festen Scharteilflächen derart bewegt, daß die für den Einstechvorgang wirksame vordere Scharteilfläche und die für den Hubvorgang wirksame hintere Scharteilfläche eine in Tandemanordnung wirkende Gesamtscharfläche bilden, deren Teilflächen abwechselnd den Einstechvorgang und anschließend den Hubvorgang durchführen.

2. Lockerungsgerät nach Anspruch 1, dadurch gekennzeichnet, daß die Scharspitze (35) des die hintere Scharteilfläche bildenden Schares (11) gegenüber der Scharspitze (33) des die vordere Scharteilfläche bildenden Schares (10) einen vertikalen Abstand (32) aufweist.

3. Lockerungsgerät nach Anspruch 1 oder 2, dadurch gekennzeichnet, daß die Scharteilflächen mit gegenläufigen, für beide Schare (10, 11) wesentliche Horizontalanteile aufweisenden Bewegungen angetrieben werden.

4. Lockerungsgerät nach wenigstens einem der vorstehenden Ansprüche, dadurch gekennzeichnet, daß die Scharspitzenausschläge (18, 19) der vorderen Scharspitze (33) und der hinteren Scharspitze (35) etwa gleich groß sind und etwa der überwiegend zu fahrenden Geschwindigkeit angepaßt sind.

5. Lockerungsgerät nach wenigstens einem der vorstehenden Ansprüche, dadurch gekennzeichnet, daß die Scharspitze (33) des vorderen Schares (10) etwa senkrecht unter dem zugehörigen Gelenkpunkt (Biegepunkt 34) des zugehörigen vorderen Zahnes (6) liegt.

6. Lockerungsgerät nach wenigstens einem der vorstehenden Ansprüche, dadurch gekennzeichnet, daß die Scharspitze (35) des hinteren Schares (11) einen Abstand (36) zur durch den Gelenkpunkt (Biegepunkt 38) des ihr zugeordneten hinteren Zahnes (7) verlaufenden Senkrechten (37) aufweist.

7. Lockerungsgerät nach wenigstens einem der vorstehenden Ansprüche, dadurch gekennzeichnet, daß die Scharflächen, Scharkanten und Anstellwinkel in ihren Größen und Gestaltungen so dimensioniert sind, daß unter Berücksichtigung der während der Lockerungsbewegung auftretenden Widerstände die Antriebsleistungen beider Zähne jeweils etwa gleich groß sind.

8. Lockerungsgerät nach wenigstens einem der vorstehenden Ansprüche, dadurch gekennzeichnet, daß zum Ausgleich der bewegten Massen, insbesondere der nicht durch gemeinsamen Antrieb ausgeglichenen vertikal bewegten Massen Fliehgewichte (39), vorzugsweise auf den Antriebswellen vorgesehen sind.

9. Lockerungsgerät nach wenigstens einem der vorstehenden Ansprüche, dadurch gekennzeichnet, daß die Zähne (6, 7) als Winkelhebel ausgebildet sind, an die jeweils von einem gemeinsamen Exzenter (13) angetriebene pleuel (12) angreifen.

10. Lockerungsgerät nach wenigstens einem der vorstehenden Ansprüche, dadurch gekennzeichnet, daß die Gelenke der Zähne (6, 7) von Blattfedern (8, 9) gebildet sind, die in Richtung der resultierenden Haltekräfte (22 bzw. 25) sind angeordnet.

11. Lockerungsgerät nach wenigstens einem der vorstehenden Ansprüche, dadurch gekennzeichnet, daß beide Zähne (6, 7) jeder Lockerungsfurche an einem einzigen Pleuel (12) geringen Hubes von etwa 10 mm angelenkt sind, wobei die Blattfedern (8, 9) den Wegausgleich in horizontaler Richtung übernehmen.

12. Lockerungsgerät nach Anspruch 10, dadurch gekennzeichnet, daß die Blattfeder (8) des vorderen Zahnes (6) zur Vertikalen unten nach hinten und die Blattfeder (9) des hinteren Zahnes (7) unten nach vorn geneigt sind. (Fig. 3)

13. Lockerungsgerät nach wenigstens einem der vorstehenden Ansprüche, dadurch gekennzeichnet, daß der Rahmen (5) mit Halterungen (3, 4; a, b, c, d) für die unmittelbare Abstützung an einem mit Rädern und Reifen versehenen Zugfahrzeug (1) ausgebildet ist.

14. Lockerungsgerät nach wenigstens einem der vorstehenden Ansprüche, dadurch gekennzeichnet, daß die Schare (10, 11) mit etwa gleichen An- stellwinkeln an den Zähnen (6, 7) befestigt sind und vorzugsweise das vordere Schar (10) kleiner als das hintere Schar (11) ausgebildet ist.

15. Lockerungsgerät nach wenigstens einem der vorstehenden Ansprüche, dadurch gekennzeichnet, daß die Scharspitze (35) des hinteren Schares (11) etwa auf Höhe der Hinterkante der Scharteilfläche des vorderen Schares (11) liegt.

**Revendications**

1. Outil d'ameublissement (2) pour ameublir en profondeur des sols tassés, la plupart du temps utilisés du point de vue agricole, avec un châssis (5) qui peut être fixé de façon réglable à un tracteur (1) et avec des socs (10, 11) entraînés, qui réalisent de façon mobile un processus d'enfoncement et un processus consécutif de levage, et qui sont disposés sur des dents (6, 7) déplaçables dans la profondeur d'enfoncement, caractérisé en ce que les socs (10, 11), qui forment une surface de soc globale en coopération pour chaque sillon d'ameublissement, sont divisés en des surfaces partielles de soc disposées séparément et mobiles séparément et sont fixés sur deux dents (6, 7) disposées l'une derrière l'autre pour chaque sillon d'ameublissement et fixées sur le châssis, et en ce que le dispositif d'entraînement (12, 13) déplace les deux dents (6, 7) avec leurs surfaces partielles de soc fixes de telle façon que la surface partielle de soc avant qui est active pour le processus d'enfoncement et que la surface partielle de soc arrière qui est active pour le processus de levage forment une surface globale de soc qui agit selon une disposition en tandem, dont les surfaces partielles réalisent tour à tour le processus d'enfoncement puis le processus de levage.

2. Outil d'ameublissement selon la revendication 1, caractérisé en ce que la pointe de soc (35) du soc (11) qui forme la surface partielle de soc arrière présente une distance verticale (32) par rapport à la pointe de soc (33) du soc (10) qui forme la surface partielle de soc avant.

3. Outil d'ameublissement selon la revendication 1 ou 2, caractérisé en ce que les surfaces partielles de soc sont entraînées avec des mouvements opposés qui présentent pour les deux socs (10, 11) des composantes sensiblement horizontales.

4. Outil d'ameublissement selon au moins l'une des revendications précédentes, caractérisé en ce que les déviations (18, 19) de la pointe de soc avant (33) et de la pointe de soc arrière (35) sont sensiblement identiques et sont approximativement adaptées à la vitesse de déplacement prépondérante.

5. Outil d'ameublissement selon au moins l'une des revendications précédentes, caractérisé en ce que la pointe de soc (33) du soc avant (10) est située sensiblement verticalement sous le point d'articulation (point de flexion 34) associé de la dent (6) avant associée.

6. Outil d'ameublissement selon au moins l'une des revendications précédentes, caractérisé en ce que la pointe de soc (35) du soc arrière (11) présente une distance (36) par rapport à la verticale (37) qui passe par le point d'articulation (point de flexion 38) de la dent (7) arrière qui lui est associée.

7. Outil d'ameublissement selon au moins l'une des revendications précédentes, caractérisé en ce que les surfaces de soc, les arêtes de soc et les angles d'inclinaison sont dimensionnés en ce qui concerne leur taille et leur configuration de telle façon que les performances d'entraînement des deux dents sont à chaque fois sensiblement identiques compte tenu des résistances qui apparaissent au cours du mouvement d'ameublissement.

8. Outil d'ameublissement selon au moins l'une des revendications précédentes, caractérisé en ce que des contrepoids (39) sont prévus de préférence sur les arbres d'entraînement pour compenser les masses déplacées, en particulier les masses déplacées verticalement qui ne sont pas compensées par un entraînement commun.

9. Outil d'ameublissement selon au moins l'une des revendications précédentes, caractérisé en ce que les dents (6, 7) sont sous forme de leviers coudés sur lesquels sont fixées des bielles (12) entraînées par un excentrique commun.

10. Outil d'ameublissement selon au moins l'une des revendications précédentes, caractérisé en ce que les articulations des dents (6, 7) sont constituées par des ressorts à lames (8, 9) qui sont disposés dans la direction des forces de maintien résultantes (22, 25).

11. Outil d'ameublissement selon au moins l'une des revendications précédentes, caractérisé en ce que les deux dents (6, 7) de chaque sillon d'ameublissement sont articulées à une bielle (12) unique de faible course d'environ 10 mm, les ressorts à lames (8, 9) prenant en charge la compensation de trajectoire en direction horizontale.

12. Outil d'ameublissement selon la revendication 10, caractérisé en ce que le ressort à lames (8) de la dent avant (6) est incliné en bas vers l'arrière par rapport à la verticale et en ce que le ressort à lames (9) de la dent arrière (7) est incliné en bas vers l'avant.

13. Outil d'ameublissement selon au moins l'une des revendications précédentes, caractérisé en ce que le châssis (5) présente des fixations (3, 4; a, b, c, d) pour un support direct sur un tracteur (1) muni de roues et de pneus.

14. Outil d'ameublissement selon au moins l'une des revendications précédentes, caractérisé en ce que les socs (10, 11) sont fixés sur les dents (6, 7) avec des angles d'inclinaison sensiblement identiques et en ce que le soc avant (10) est de préférence plus petit que le soc arrière (11).

15. Outil d'ameublissement selon au moins l'une des revendications précédentes, caractérisé en ce que la pointe (35) du soc arrière (11) est située approximativement à la hauteur de l'arête arrière de la surface partielle de soc du soc avant (10).

**Claims**

1. A loosening device (2) for the deep loosening of compacted soils which have been mostly in agricultural use, having a frame (5) which can be adjustably arranged on a traction vehicle (1) and having driven shares (10, 11) which movably carry out a plunging process and a subsequent lifting process and which are arranged on tines (6, 7) whose depth of penetration is adjustable, characterised in that the shares (10, 11), which form one cooperating total share surface per loosening furrow, are divided into separately mounted and separately movable partial share surfaces and are fastened to two tines (6, 7) per loosening furrow arranged one behind the other and hinged to the frame, and the drive (12, 13) moves the two tines (6, 7) with their fixed partial share surfaces in such a way that the front partial share surface which is active in the plunging process and the rear partial share surface which is active in the lifting process form a total share surface acting in a tandem arrangement, the partial surfaces of which carry out alternately the plunging process and then the lifting process.

2. A loosening device according to Claim 1, characterised in that the share tip (35) of the share (11) forming the rear partial share surface is at a vertical distance (32) from the share tip (33) of the share (10) forming the front partial share surface.

3. A loosening device according to Claim 1 or 2, characterised in that the partial share surfaces are driven with movements running in opposite directions and having substantial horizontal portions for both shares (10, 11).

4. A loosening device according to at least one of the preceding claims, characterised in that the share tip deflexions (18, 19) of the front share tip (33) and of the rear share tip (35) are of approximately the same size and are adapted to the predominant travelling speed.

5. A loosening device according to at least one of the preceding claims, characterised in that the share tip (33) of the front share (10) lies approximately vertically below the relevant hinge point (bending point 34) of the relevant front tine (6).

6. A loosening device according to at least one of the preceding claims, characterised in that the share tip (35) of the rear share (11) is at a distance (36) from the vertical (37) running through the hinge point (bending point 38) of the rear tine (7) associated with the share tip.

7. A loosening device according to at least one of the preceding claims, characterised in that the share surfaces, share edges and angles of incidence are dimensioned in size and shape in such a way that, taking into account the resistances occurring during the loosening movement, the drive loadings of both tines are approximately the same in each case.

8. A loosening device according to at least one of the preceding claims, characterised in that centrifugal weights (39) are provided, preferably on the drive shafts, in order to balance out the moved masses, in particular the vertically moved masses not balanced out by joint drive.

9. A loosening device according to at least one of the preceding claims, characterised in that the tines (6, 7) are constructed as angled levers on which plungers (12) act which are each driven by a common eccentric (13).

10. A loosening device according to at least one of the preceding claims, characterised in that the hinge joints of the tines (6, 7) are formed by leaf springs (8, 9) which are arranged in the direction of the resultant holding forces (22 or 25 respectively).

11. A loosening device according to at least one of the preceding claims, characterised in that both tines (6, 7) of each loosening furrow are hinged to a single connecting rod (12) having a small stroke of approximately 100 mm, the leaf springs (8, 9) taking over the path compensation in a horizontal direction.

12. A loosening device according to Claim 10, characterised in that the leaf spring (8) of the front tine (6) is inclined to the vertical towards the rear at the bottom and the leaf spring (9) of the rear tine (7) is inclined to the vertical towards the front at the bottom (Fig. 3).

13. A loosening device according to at least one of the preceding claims, characterised in that the frame (5) is constructed with mountings (3, 4; a, b, c, d) for direct support on a traction vehicle (1) provided with wheels and tyres.

14. A loosening device according to at least one of the preceding claims, characterised in that the shares (10, 11) are fastened to the tines (6, 7) at approximately equal angles of incidence and preferably the front share is constructed smaller than the rear share (11).

15. A loosening device according to at least one of the preceding claims, characterised in that the share tip (35) of the rear share (11) lies approximately at the height of the rear edge of the partial share surface of the front share (11).

EP 0 157 337 B1

Fig. 1

Fig. 2

Fig. 3

Fig. 4